Europäisches Patentamt

European Patent Office

Office européen des brevets

(11) Publication number : **0 627 459 A1**

# EUROPEAN PATENT APPLICATION

(21) Application number : 94303579.0

(22) Date of filing : 19.05.94

(51) Int. Cl.⁵ : **C08K 3/30, C08K 7/14**

(30) Priority : 31.05.93 JP 154225/93

(43) Date of publication of application :
07.12.94 Bulletin 94/49

(84) Designated Contracting States :
**DE ES FR GB IT NL**

(71) Applicant : **GE PLASTICS JAPAN LIMITED**
**7-2, 3-Chome,**
**Nihonbashi-Honcho**
**Chuo-Ku, Tokyo (JP)**

(72) Inventor : **Ohtsuka, Yoshio**
**1077-24 Akabane,**
**Ichikai-Mach**
**Haga-Gun, Tochigi Prefecture (JP)**
Inventor : **Oishi, Katsumi**
**1305-81 Tamado**
**Shimodate Cit, Ibaraki Prefecture (JP)**

(74) Representative : **Pratt, Richard Wilson et al**
**London Patent Operation**
**G.E. Technical Services Co. Inc.**
**Essex House**
**12/13 Essex Street**
**London WC2R 3AA (GB)**

(54) **A glass fiber reinforced thermoplastic resin composition.**

(57)    A thermoplastic polycyclohexanedimethylene terephthalate (PCT) resin composition reinforced with 5-60 wt% glass fiber and wherein said thermoplastic resin composition contains 0.01-20.0 wt% zinc sulfide as a pigment exhibits excellent impact strength and other properties.

EP 0 627 459 A1

The present invention concerns a thermoplastic resin composition that is reinforced with glass fiber. In particular, the present invention concerns a thermoplastic resin composition that is a thermoplastic polycyclohexanedimethylene terephthalate (hereinafter abbreviated to "PCT") resin and that is colored with a pigment.

Thermoplastic resins reinforced with glass fiber are especially superior to nonreinforced thermoplastic resin as a synthetic resin material in the field of injection molding. Such thermoplastic resins possess improved mechanical characteristics, in particular, excellent tensile strength, thermal stability and a high modulus of elasticity.

However, it has been known for many years that the physical properties of glass fiber reinforced thermoplastic resins colored with inorganic pigments such as titanium dioxide are inferior to those of like materials that are not colored. Specifically, some of the reinforcing effect imparted by the glass is lost. Many of the other glass fiber reinforced thermoplastic resins experience a certain reduction in impact strength.

Inorganic pigments possess clearly evident advantages as compared to ordinary organic dyes and pigments. Such inorganic pigments possess high thermal stability and resistance to the high temperatures required in the extrusion molding or injection molding of glass fiber reinforced thermoplastic resins. The glass fiber content requires a much higher temperature than that needed in the working of materials that are not reinforced.

Moreover, only inorganic white pigments have the high index of refraction needed to guarantee good optical dispersion and high brightening. For this reason, titanium dioxide is often used as a white pigment in formulations for pigments and pigment mixtures.

The objective of the present invention is to provide a glass fiber reinforced thermoplastic molding material colored with an inorganic pigment, which does not possess the aforementioned problems and which is superior in terms of good coloring properties and of good physical properties such as tensile strength and impact strength.

The aforementioned problems are solved by a thermoplastic PTC resin composition, characterized in that it is a thermoplastic PCT resin composition which is reinforced with the use of 5-60 wt% glass fiber as against the molding material, and that 0.01-20.0 wt% zinc sulfide is used as the pigment.

The zinc sulfide pigment pertaining to the present invention is a white metal salt and mineral (having a zinc blend or wurtzite structure), and provides a high index of specific refraction that is satisfactory in synthetic resins. Good color properties and coating properties can be obtained by using a particulate pigment.

For the purpose of surface treatment, 0.01-5.0 and preferably 1.0-2.0 parts by weight $Al_2O_3 \cdot nH_2O$, or 0.01-5.0 and preferably 1.0-2.0 parts by weight $SiO_2 \cdot nH_2O$, are added and dispersed over the zinc sulfide surface to improve the surface.

In these treatments, the $Al_2O_3 \cdot nH_2O$ and $SiO_2 \cdot nH_2O$ can be used. together, or, after the surface treatments using these materials have been performed, 0.01-5.0 and preferably 1.0-2.0 parts by weight alkylsiloxane can be added and dispersed over the zinc sulfide surface. The pigment can also be subjected to other surface treatments in order to, e.g., improve the dispersability of the synthetic resin.

Besides the glass fiber that is added as a reinforcing material, it is also possible to contain other fillers such as glass balls, mineral matter fillers such as chalk, mother of pearl and talc and, depending on the situation, processing adjuvants, stabilizers, organic pigments and dyes.

In manufacturing the molding material of the present invention, it is possible to use any of the methods suited to the manufacture of colored glass fiber reinforced thermoplastic resins. In the manufacture, which is carried out by means of a suitable mixing and extruding device, a thermoplastic synthetic resin is melted and then mixed with glass fiber, pigments, fillers and other additives. The amount of glass fiber can be set at 5-60 wt%.

The pigment employed in the present invention can be in the form of master pellets obtained by mixing large amounts of pigment into the synthetic resin beforehand. These pellets can be mixed with synthetic resin in a drum prior to manufacture, or can be added subsequently in the injection molding, for example.

Application examples

(a)

30 parts by weight glass fiber were added to 70 parts by weight PCT resin (brand name: F209; product of American GE Corp.), 2 parts by weight titanium dioxide (Mohs hardness of 6.5-7.0) possessing a rutile crystal structure were also added, and the ingredients were premixed with a mixer. This premixture was then kneaded and melted by means of an extruder (model TSE, product of Toshiba Machinery Ltd.). The product obtained by granulation of the extruded strand was molded with the use of an injection molder (a 100-ton injection molder produced by Toshiba Machinery Ltd.), and various mechanical characteristics of the molded product were measured. It should be noted that the injection molded product was tested in a dry condition.

(b)

This application example was carried out in the same manner as in (a). However, 2 parts by weight zinc sulfide (Mohs hardness of 3.5) having a wurtzite structure were added in place of the titanium dioxide.

(c)

The same operations as in (a) and (b) were carried out. However, 2 parts by weight of a product obtained by subjecting zinc sulfide with a wurtzite structure used in Example 6 to a surface treatment, that is, 2 parts by weight of a product obtained by dispersing 3 parts by weight $Al_2O_3 \cdot nH_2O$, 3 parts by weight $SiO_2 \cdot nH_2O$ and 3 parts by weight alkylsiloxane over the zinc sulfide beforehand, were added.

The results of the aforementioned tests are shown below.

## Table I

| Example | Additive (2 parts by wt) | Impact Strength JISK7110 Kgf/cm$^2$ | Tensile Strength JISK7113 Kgf/cm$^2$ | Bending Strength JISK7203 Kgf/cm$^2$ | L* brightness Index JISZ8722-1982 JISZ8729-1980 |
|---------|--------------------------|--------------------------------------|---------------------------------------|---------------------------------------|------------------------------------------------|
| a | TiO$_2$ | 4.0 | 720 | 1250 | 88.0 |
| b | ZnS | 6.0 | 940 | 1490 | 84.0 |
| c | ZnS (surface treated) | 6.0 | 940 | 1500 | 85.0 |

Besides the aforementioned PCT resins, it is also possible to use the material with the brand name "EKTR" PCT Polymer 13787, produced by Eastman Chemical Company.

As is clear from Table I, the glass fiber reinforced PCT resin colored composition of the present invention in which the white colorant specified by the present invention was used has clearly improved tensile strength and impact strength as compared to, e.g., compositions colored with titanium dioxide.

Accordingly, the white-colored composition that is a thermoplastic polycyclohexanedimethylene terephthalate resin composition can provide a vivid white color, and has prospective future uses in a wide range of industrial applications which include electrical and electronic parts, automotive parts, and electric power tools that exploit the various characteristics inherent to the resin.

## Claims

1. A thermoplastic polycyclohexanedimethylene terephthalate resin composition reinforced with the use of 5-60 wt% glass fiber, wherein said glass fiber reinforced thermoplastic resin composition is characterized in that it contains 0.01-20.0 wt% zinc sulfide as a pigment.

European Patent Office

**EUROPEAN SEARCH REPORT**

Application Number

EP 94 30 3579

## DOCUMENTS CONSIDERED TO BE RELEVANT

| Category | Citation of document with indication, where appropriate, of relevant passages | Relevant to claim | CLASSIFICATION OF THE APPLICATION (Int.Cl.5) |
|---|---|---|---|
| Y | DE-A-22 26 932 (BASF AG) * page 2 - page 3, paragraph 2; claims * | 1 | C08K3/30 C08K7/14 |
| Y | DATABASE WPI Week 9303, Derwent Publications Ltd., London, GB; AN 93-024309 & JP-A-4 353 536 (IDEMITSU PETROCHEM CO) 8 December 1992 * abstract * | 1 | |

TECHNICAL FIELDS SEARCHED (Int.Cl.5)

C08K

The present search report has been drawn up for all claims

| Place of search | Date of completion of the search | Examiner |
|---|---|---|
| BERLIN | 29 September 1994 | Kuehne, H-C |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)